# FASCICULE DE BREVET EUROPEEN

(11) **EP 0 939 331 B1**
(45) Date de publication et mention de la délivrance du brevet: **14.04.2010**
(21) Numéro de dépôt: 99103395.2
(22) Date de dépôt: 22.02.1999
(51) Int. Cl.: G04C 17/00, G04G 9/00

(54) **Ensemble d'affichage comprenant deux dispositifs d'affichage superposés**
Anzeigeeinheit mit zwei aufeinander liegenden Anzeigevorrichtungen
Display unit comprising two superposed display devices

(30) Priorité: 27.02.1998 CH 46698; 02.03.1998 EP 98103611
(43) Date de publication de la demande: 01.09.1999
(73) Titulaire: ASULAB S.A., 2074 Marin (CH)
(72) Inventeur: Naci, Basturk, 2073 Enges (CH)
(74) Mandataire: Ravenel, Thierry Gérard Louis

(56) Documents cités:
- EP-A- 0 516 076
- EP-A- 0 600 349
- EP-A- 0 643 318
- EP-A- 0 724 180
- EP-A- 0 814 366
- EP-A- 0 825 477
- EP-A- 0 927 917

## Description

La présente invention concerne un ensemble d'affichage comprenant au moins deux dispositifs d'affichage superposés, et plus particulièrement une pièce d'horlogerie comprenant un ensemble d'affichage de ce type dans lequel un dispositif d'affichage analogique est combiné à un dispositif d'affichage numérique.

On connaît déjà par le brevet FR 2426282 une montre électronique comprenant une boîte dans laquelle sont ménagés à la fois un dispositif d'affichage analogique et un dispositif d'affichage numérique. Le dispositif d'affichage analogique comprend une aiguille des heures et une aiguille des minutes qui se déplacent de façon classique au-dessus d'un cadran, tandis que le dispositif d'affichage numérique comprend une cellule à cristaux liquides transparente disposée devant le dispositif d'affichage analogique qu'elle recouvre complètement. Dans ce brevet, le dispositif d'affichage numérique permet l'affichage de caractères alphanumériques, par exemple le jour de la semaine et le quantième en foncé sur fond clair. La cellule à cristaux liquides forme la glace de la montre. Il s'agit d'une cellule à cristaux liquides du type nématique en hélice comprenant deux polariseurs disposés de part et d'autre de la cellule, le cadran qui se trouve sous la cellule étant utilisé comme réflecteur. Avec une telle structure, le réflecteur, et donc le cadran de la montre, doivent réfléchir la lumière incidente sans modifier sa polarisation afin de produire un affichage brillant et contrasté. Ce dispositif d'affichage limite donc le type de cadran qu'il est possible d'utiliser pour former le dispositif d'affichage inférieur, notamment lorsque le dispositif inférieur est un dispositif d'affichage numérique. Dans ce cas, seuls des cadrans ayant des propriétés de réflexion non diffusante, autrement dit des réflecteurs métalliques, peuvent être employés.

Par ailleurs, ce type de cellule affiche généralement les informations en foncé sur fond clair, ce qui exclut l'utilisation de cadrans foncés comme réflecteurs. De plus, le fond clair apparaît en réalité plutôt grisâtre en raison de l'absorption d'une quantité non négligeable de lumière par les polariseurs, ce qui confère au dispositif d'affichage une lisibilité et une luminosité peu satisfaisantes.

Une telle limitation dans le choix des cadrans représente un inconvénient important pour les fabricants de montres qui souhaitent pouvoir mettre sur le marché des montres comportant des cadrans de tout type pour s'adapter aux évolutions de la mode.

En outre, comme la réflexion de la lumière se fait sur le cadran, et donc à une certaine distance de la cellule, typiquement 2 à 3 mm, les images des segments commutés de la cellule apparaissent en projection sur le cadran, ce qui conduit au dédoublement optique de l'information affichée. Ceci nuit non seulement à l'esthétique de la montre, mais aussi, bien sûr, à la lisibilité de l'information affichée.

EP0643318 décrit un dispositif électronique comprenant deux dispositifs d'affichage superposés. Le dispositif d'affichage supérieur comporte une cellule PDLC et est agencé pour être rendu transparent à la lumière ou alternativement pour cacher au moins une partie de l'affichage inférieur.

La présente invention a pour but de remédier aux inconvénients de l'art antérieur susmentionnés en proposant un ensemble d'affichage comportant au moins deux dispositifs d'affichage superposés, respectivement inférieur et supérieur, dans lequel la luminosité des informations affichées par le dispositif d'affichage supérieur et donc leur lisibilité, sont peu ou pas dépendantes de la nature (diffusant/réfléchissant) du cadran de l'affichage inférieur et de sa couleur (claire ou foncée).

La présente invention a également pour but de fournir un ensemble d'affichage dans lequel le dispositif d'affichage supérieur est un dispositif à cristaux liquides présentant un contraste d'affichage amélioré.

La présente invention a également pour but de fournir une pièce d'horlogerie équipée d'un tel ensemble d'affichage présentant un aspect esthétique amélioré.

A cet effet, selon un premier mode de réalisation, l'invention a pour objet un ensemble d'affichage tel que défini dans la revendication 1.

Grâce à ces caractéristiques, la réflexion de la lumière incidente pénétrant dans la cellule ne se fait plus sur un cadran placé derrière celle-ci comme cela était le cas dans l'art antérieur, mais directement au niveau de la cellule à cristaux liquides lorsque celle-ci est commutée dans le deuxième état. Ceci permet, d'une part, d'éliminer toute projection parasite des zones commutées sur le cadran, et donc d'éviter le double affichage de ces zones pour l'observateur et, d'autre part, de laisser une totale liberté aux fabricants de montres dans le choix des couleurs et de la nature des cadrans ou du dispositif d'affichage inférieur. Une telle structure d'affichage augmente en outre la luminosité de l'information affichée et, par conséquent, sa lisibilité, notamment lorsque le dispositif d'affichage inférieur est foncé ou comprend un cadran foncé.

Le passage de la lumière à travers la deuxième lame quart d'onde permet de transformer la lumière polarisée circulaire issue du film cholestérique en lumière polarisée linéaire pour laquelle le réflecteur métallique est plus efficace. Cette structure permet d'homogénéiser la lumière réfléchie par l'ensemble d'affichage et de rendre la couleur de ce dernier moins dépendante de la longueur d'onde de la lumière

Selon un deuxième mode de réalisation, l'invention a pour objet un ensemble d'affichage tel que défini dans la revendication 2. munie d'un polariseur placé devant la cellule, et d'une lame quart d'onde associée à un film cholestérique ayant un premier sens d'hélice, placés successivement derrière la cellule, le dispositif d'affichage inférieur comprenant un miroir cholestérique ayant un sens d'hélice inverse à celui dudit film cholestérique.

Grâce à cette structure, la totalité de la lumière traversant le film cholestérique, et représentant la moitié de la lumière incidente, est réfléchie par le miroir cholestérique, ce qui permet d'améliorer la brillance du dispositif d'affichage. Dans le cas d'une montre bracelet ou analogue, le miroir cholestérique peut avantageusement former le cadran de la montre. Un autre avantage de cette structure réside dans le fait que l'on peut choisir des miroirs cholestériques de différentes couleurs, ce qui permet de réaliser des ensembles d'affichage colorés.

Selon un troisième mode de réalisation, l'invention a pour objet un ensemble d'affichage tel que défini dans la revendication 3.

Grâce à cette structure, on peut utiliser deux mêmes éléments optiques associés à la cellule d'affichage, ce qui représente un avantage du point de vue pratique.

Selon encore un autre mode de réalisation de l'invention, la cellule d'affichage est dans un état transparent en l'absence de tension appliquée par les moyens de commande.

L'information affichée par le dispositif d'affichage inférieur est ainsi visible en permanence, sans que le dispositif d'affichage supérieur consomme d'énergie. Ceci est particulièrement avantageux dans le cadre de l'application de cet ensemble d'affichage à un objet portable telle qu'une montre-bracelet.

D'autres caractéristiques et avantages de la présente invention apparaîtront dans la description suivante d'un mode de réalisation préféré, présenté à titre d'exemple non limitatif en référence aux dessins annexés, dans lesquels :
- la figure 1 est une vue en coupe d'une montre-bracelet équipée d'un ensemble d'affichage selon la présente invention, l'ensemble étant commuté dans un premier état laissant apparaître le dispositif d'affichage inférieur;
- la figure 2 est une vue de dessus de la montre-bracelet représentée sur la figure 1, l'ensemble d'affichage étant dans le même état de commutation qu'à la figure 1;
- les figures 3 et 4 sont des vues analogues à celles des figures respectivement 1 et 2, l'ensemble d'affichage étant commuté dans un deuxième état dans lequel l'information est affichée en opaque réfléchissant sur fond transparent,
- la figure 5 est une vue de dessus d'une montre-bracelet analogue à celle de la figure 4 comprenant un ensemble d'affichage selon l'invention
dans lequel l'information est affichée en transparent sur fond réflectif opaque;
- les figures 6 à 8 représentent des vues schématiques de différents modes de réalisation de l'ensemble d'affichage selon l'invention, et
- les figures 9a, 9b et 10a, 10b sont des vues schématiques de cellules d'affichage à cristaux liquides du type nématique en hélice.

La description de l'invention va être faite dans le cadre d'une application à une pièce d'horlogerie telle qu'une montre-bracelet. Il va toutefois de soi que l'invention n'est pas limitée à cette application et qu'elle pourra être avantageusement utilisée dans le cadre de toute autre application nécessitant l'affichage d'informations tels que des panneaux publicitaires, des instruments de mesure, etc.

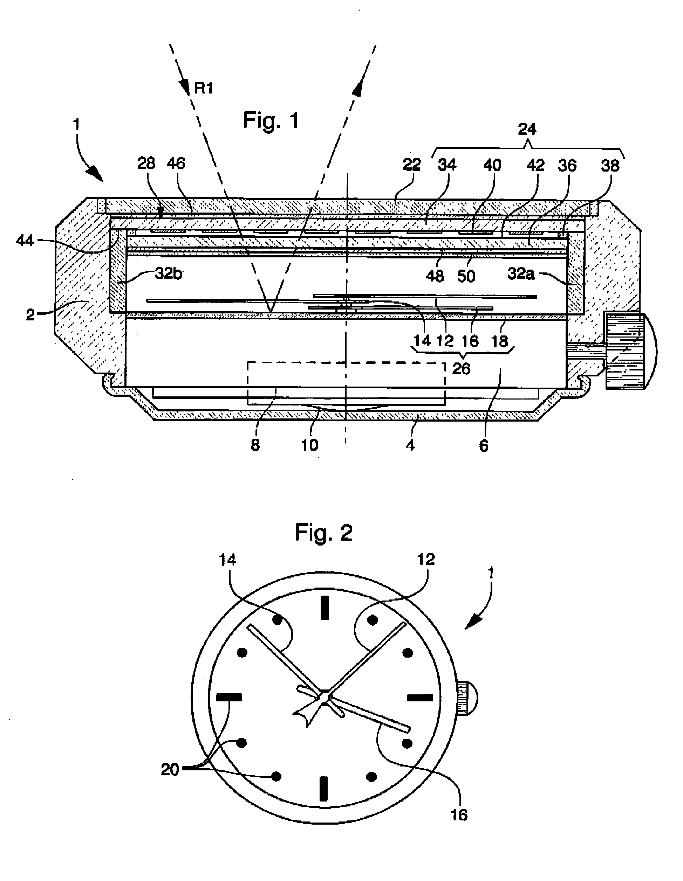

En se référant aux figures 1 à 4, on voit une pièce d'horlogerie du type montre-bracelet désignée par la référence numérique générale 1. Cette montre 1 comprend classiquement une boîte 2 munie d'un fond 4 dans laquelle sont disposés un mouvement d'horlogerie électronique 6 et une pile 8 qui prend appui sur le fond 4 par l'intermédiaire d'un ressort de contact 10. Le mouvement 6 comprend des circuits électroniques garde-temps associés, via un circuit de commande, à un dispositif d'entraînement (non représenté) d'une aiguille des secondes 12, d'une aiguille des minutes 14 et d'une aiguilles des heures 16. Ces aiguilles 12, 14 et 16 se déplacent au-dessus d'un cadran 18 qui porte des heures index 20 visibles sur la figure 2. La boîte 2 est également fermée de façon classique par une glace 22 recouvrant la totalité du cadran 18.

Selon l'invention, la montre 1 comprend en outre un ensemble d'affichage comprenant deux dispositifs d'affichage superposés respectivement supérieur 24 et inférieur 26. Dans l'exemple représenté, le dispositif d'affichage inférieur 26 comprend des moyens d'affichage de grandeurs temporelles, en particulier des moyens d'affichage analogiques de l'heure formés par les aiguilles 12, 14, 16 et le cadran 18.

Il va de soi que ce dispositif d'affichage inférieur 26 pourra être formé par un dispositif d'affichage numérique quelconque, par exemple du type à cristaux liquides. Ce dispositif d'affichage 26 pourra également comprendre une combinaison de moyens d'affichage analogiques et numériques tels que la combinaison décrite dans le brevet EP-B-0 078 237 au nom de la demanderesse, ou encore un élément décoratif, par exemple une image, un dessin, etc.

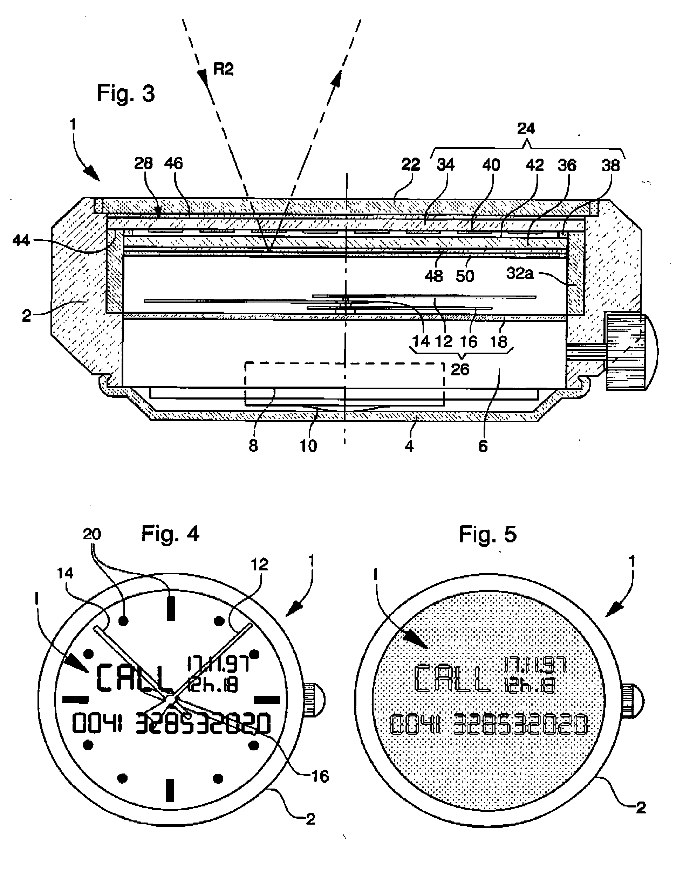

Selon l'invention, le dispositif d'affichage supérieur 24 comprend une cellule d'affichage 28 et s'étend entre le dispositif d'affichage inférieur 26 et la glace 22. Dans l'exemple représenté, ce dispositif d'affichage supérieur 24 recouvre la totalité de la surface du cadran 18. Il va de soi que, selon une variante de réalisation, le dispositif d'affichage supérieur 24 peut former la glace 22 de la montre 1. Le dispositif d'affichage supérieur 24 est agencé de sorte que la cellule d'affichage 28 soit transparente dans un premier état de commutation pour rendre visibles les informations affichées par le dispositif d'affichage inférieur 26, à savoir les aiguilles 12, 14 et 16 et le cadran 18. Une telle configuration de l'ensemble d'affichage selon l'invention est représentée sur les figures 1 et 2. D'autre part, le dispositif d'affichage supérieur 24 est agencé afin que la cellule d'affichage 28 affiche une information, par exemple du type alphanumérique, dans un deuxième état de commutation. Une telle configuration de l'ensemble d'affichage selon l'invention est représentée sur les figures 3 et 4.

La commutation de la cellule d'affichage 28 du premier état au deuxième état et inversement est assurée par des moyens de commande (non représentés) intégrés au mouvement 6, ces moyens de commande étant reliés à la cellule 28 par l'intermédiaire de connecteurs classiques 32a, 32b pour lui fournir une tension de commande. Dans l'exemple représenté, les connecteurs 32a, 32b forment également un rehaut disposé entre le bord supérieur du cadran 18 et le bord inférieur de la cellule 28.

Selon l'invention, la cellule 28 est une cellule d'affichage à cristaux liquides du type diffusant ou réflectif dans le deuxième état de commutation.

En particulier, la cellule 28 est une cellule à cristaux liquides du type nématique en hélice (TN).

Cette cellule 28 comprend un substrat avant 34 transparent, un substrat arrière 36 transparent, et un cadre de scellement 38 formant des moyens d'espacement et de fermeture délimitant avec les substrats 34 et 36 une cavité dans laquelle se trouve une couche de cristaux liquides. Les faces en regard des substrats 34 et 36 comprennent des électrodes 40 et 42 transparentes, réalisées par exemple en oxyde d'indium/étain. Dans l'exemple illustré, le substrat avant 34 porte des électrodes 40 configurées en digits formés chacun de segments permettant d'afficher des caractères alphanumériques, tandis que le substrat arrière 36 porte une électrode 42 s'étendant sur toute sa surface. Les électrodes 40 et 42 sont reliées au connecteur 32a par l'intermédiaire de plages de contact 44 situées à l'extérieur de la cavité. La cellule 28 comprend en outre, du côté de la glace 22, un polariseur linéaire 46 et, du côté du cadran 18, une lame quart d'onde 48 associée à un film cholestérique 50. Une telle cellule est semblable au dispositif d'affichage décrit dans la publication de T. J. Scheffer intitulée "Twisted Nematic Display with Cholesteric Reflector" publiée dans J. Phys. Appl. Phy., Vol. 8, 1975 qui est citée ici à titre de référence.

De préférence, le polariseur 46 est du type à efficacité de polarisation et transmission élevée tel que, par exemple, le polariseur commercialisé par la société Sanritsu, Japon sous la référence LLC25618SF.

Dans le cadre de l'invention, le dispositif 28 commutable est avantageusement transparent dans l'état non commuté, et réfléchissant dans l'état commuté.

Lorsque l'on applique ou que l'on supprime une tension entre l'électrode 42 et certaines des électrodes 40, on fait passer les cristaux liquides se trouvant entre ces électrodes 40, 42 alternativement d'un état réflectif ou diffusant à un état transparent.

On précisera que la cellule d'affichage 28 est une cellule à cristaux liquides de type nématique en hélice à 90°, le polariseur 46 est du type linéaire classique, la lame quart d'onde 48 polarise circulairement la lumière à droite, et le film cholestérique 50 est un film à hélice à gauche. Ainsi, la cellule 28 est totalement transparente (figures 1 et 2) dans le premier état de commutation, c'est-à-dire lorsqu'aucune tension n'est appliquée aux bornes des électrodes 40, 42 (état non commuté). Cet état est symbolisé par le rayon de lumière R1 sur la figure 1 où l'on voit qu'il traverse la cellule 28 et est réfléchi par le cadran 18. La cellule 28 est d'autre part réfléchissante ou diffusante dans ses régions commutées (figures 3 et 4) dans le deuxième état de commutation, c'est-à-dire lorsqu'une tension est appliquée aux bornes des électrodes 40, 42 (état commuté). Ce deuxième état est représenté par le rayon de lumière R2 sur la figure 3 où l'on voit qu'il est réfléchi par la cellule 28. On peut ainsi afficher des informations en opaque sur fond réfléchissant, l'opacité étant déterminée par la couleur réfléchie par le film cholestérique 50, et le fond étant déterminé par la couleur du cadran 18.

Dans le cas où l'on souhaite afficher en transparent sur fond opaque (figure 5), le polariseur 46 est tourné de 90° par rapport à son orientation initiale. On notera que ce même effet peut être également obtenu en tournant la lame quart d'onde 48 de 90° par rapport à son orientation initiale. Dans ce cas, la cellule 28 est opaque et réfléchissante lorsqu'aucune tension de commande n'est appliquée, et devient transparente si l'on applique une tension de commande entre les électrodes 40, 42.

Dans la suite de la description, les éléments identiques à ceux décrits en liaison avec les figures 1 à 5 seront désignés par les mêmes références numériques.

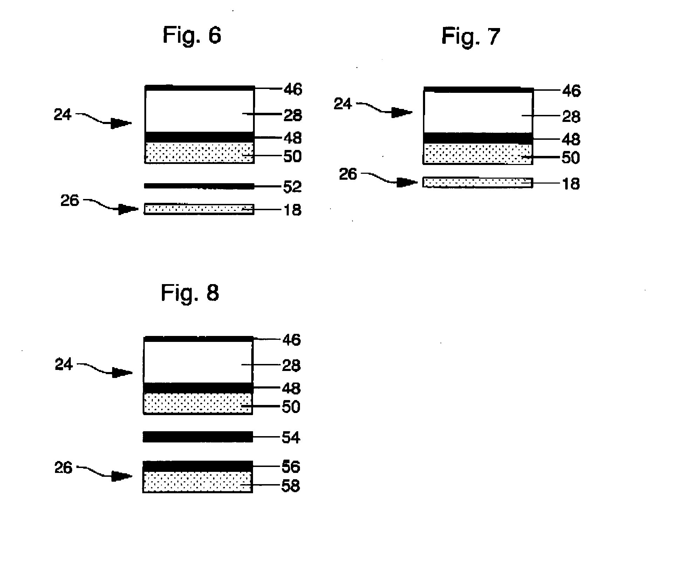

En se référant maintenant à la figure 6, on voit une première variante de réalisation de l'ensemble d'affichage de l'invention. Selon cette variante, le dispositif d'affichage supérieur 24 comprend en outre une deuxième lame quart d'onde 52 placée immédiatement derrière le film cholestérique 50, et le dispositif d'affichage inférieur 26 comprend un cadran 18 formant un réflecteur métallique. A titre d'exemple, la face visible du cadran 18 peut comprendre une couche métallique réfléchissante si le cadran 18 n'est pas réalisé en métal, ou cette face peut être polie si le cadran 18 est métallique. On notera qu'il est également possible d'intégrer la deuxième lame quart d'onde directement sur le cadran 18.

En se référant maintenant à la figure 7, on voit une deuxième variante de réalisation de l'ensemble d'affichage de l'invention. Selon cette variante, le dispositif d'affichage inférieur 26 comprend un cadran 18 formant un miroir cholestérique ayant un sens d'hélice inverse de celui dudit film cholestérique 50 du dispositif d'affichage supérieur 24.

En se référant maintenant à la figure 8, on voit une troisième variante de réalisation de l'ensemble d'affichage de l'invention. Selon cette variante, le dispositif d'affichage inférieur 26 comprend en outre une deuxième et une troisième lames quart d'onde 54, 56 et un deuxième film cholestérique 58 remplaçant le cadran 18. On pourra également intégrer la lame quart d'onde 48 et le film cholestérique 50 en un seul élément tel que, par exemple, le produit TRANSMAX® commercialisé par Merck.

Il est évident que tout autre polariseur réfléchissant une des composantes de la lumière polarisée linéairement et transmettant l'autre composante sensiblement perpendiculaire à la première, peut également être utilisé derrière la cellule 28 du type TN munie d'un polariseur linéaire devant la cellule.

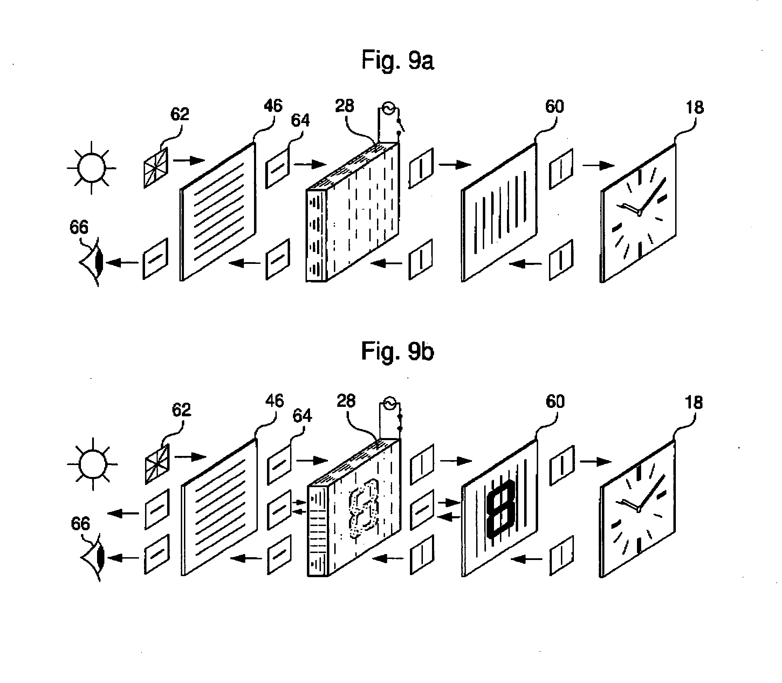

Dans un premier état représenté à la figure 9a, le polariseur linéaire 46 et le polariseur réflectif 60 sont orientés de façon à avoir leurs axes de polarisation croisés. Avec une cellule d'affichage 28 qui est une cellule à cristaux liquides du type nématique en hélice à anisotropie positive placée entre les deux, l'état non commuté de la cellule 28 est totalement transparent, de sorte que le cadran 18 est visible. En effet, comme on le voit sur la figure 9a, la lumière naturelle non polarisée, désignée par la référence numérique 62, est polarisée verticalement par le polariseur linéaire 46. La direction de polarisation de la lumière, désignée par la référence 64, est ensuite tournée de 90° lors de son passage à travers la cellule d'affichage 28, puis est transmise sans modification par le polariseur réflectif 60 jusqu'au cadran 18. La lumière suit le même chemin lors de son trajet retour, de sorte que le cadran 18 est visible pour un observateur 66. En revanche, lorsque la cellule 28 est dans l'état commuté (figure 9b), le cadran 18 est au moins partiellement masqué. En effet, dans ce deuxième état de commutation, la cellule 28 est réfléchissante ou diffusante dans ses régions commutées, c'est-à-dire dans les zones dans lesquelles les électrodes 40, 42 sont commutées. Comme on le voit sur la figure 9b, la lumière polarisée verticalement qui traverse la cellule 28 dans les zones commutées de cette dernière n'est pas modifiée, de sorte qu'elle est réfléchie par le polariseur réflectif 60. De même, la lumière qui traverse qui traverse la cellule 28 en dehors des zones commutées est transmise jusqu'au cadran 18. Les informations sont ainsi affichées en opaque sur fond transparent, l'opacité étant déterminée par la couleur réfléchie par le polariseur réflectif 60, et le fond étant déterminé par la couleur du cadran 18. On voit également sur la figure 9b que l'adressage de la cellule 28 est normal, c'est-à-dire que les segments commutés sont ceux que l'on cherche à afficher effectivement. Selon une variante non représentée au dessin, l'adressage de la cellule d'affichage 28 peut être inverse, c'est-à-dire que tous les segments de ladite cellule 28 sont commutés, à l'exclusion de ceux que l'on cherche à afficher. Dans ce cas, les informations sont affichées en transparent sur fond opaque, la transparence étant, ici aussi, déterminée par la couleur du cadran 18. On notera qu'en tournant le polariseur linéaire 46 de 90°, on peut obtenir la situation inverse, c'est-à-dire l'état non commuté est opaque, et l'état commuté est transparent.

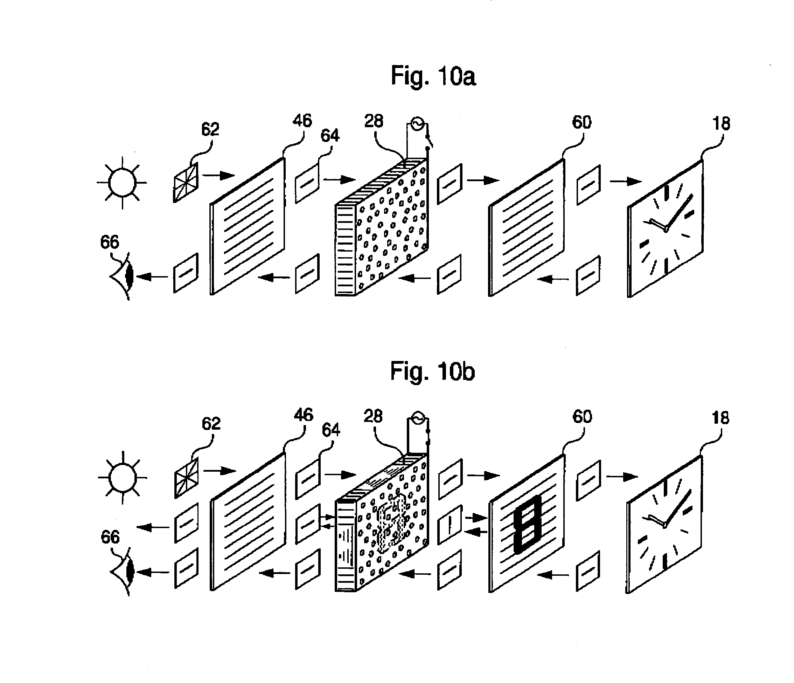

Dans un deuxième état représenté à la figure 10a, le polariseur linéaire 46 et le polariseur réflectif 60 sont orientés de façon à avoir leurs axes de polarisation parallèles. Entre les deux polariseurs 46, 60 est placée une cellule d'affichage 28 qui est une cellule à cristaux liquides du type nématique en hélice à anisotropie négative. L'alignement des molécules de cristal liquide est donc homéotrope à l'état non commuté de ladite cellule 28, de sorte que cette dernière est sans effet sur la direction de polarisation de la lumière dans cet état. En appliquant, pour la direction de polarisation de la lumière, un raisonnement analogue à celui développé en liaison avec les figures 9a et 9b, on comprendra que l'état non commuté de la cellule 28 est totalement transparent (figure 10a), de sorte que le cadran 18 est visible. En revanche, dans le deuxième état de commutation (figure 10b), la cellule 28 est réfléchissante ou diffusante dans ses zones dans lesquelles les électrodes 40 et 42 sont commutées. Le cadran 18 est ainsi partiellement masqué, et les informations apparaissent à l'observateur 66 en opaque sur fond transparent, l'opacité étant déterminée par la couleur réfléchie par le polariseur réflectif 60, et le fond étant déterminé par la couleur du cadran 18. On voit également sur la figure 10b que l'adressage de la cellule 28 est normal, c'est-à-dire que les segments commutés sont ceux que l'on cherche à afficher. Selon une variante non représentée au dessin, l'adressage de la cellule 28 peut aussi être inverse. Les informations sont alors affichées en transparent sur fond opaque, la transparence étant déterminée par la couleur du cadran 18, et le fond étant déterminé par la couleur réfléchie par le polariseur réflectif 60.

L'ensemble d'affichage selon l'invention permet donc, en fonction de l'état de commutation et du type de la cellule 28, d'obtenir différentes configurations d'affichage.

La commutation de la cellule 28 peut être réalisée de façon classique par exemple par l'intermédiaire d'interrupteurs commandés par un ou plusieurs poussoirs (non représentés sur le dessin), chaque actionnement d'un poussoir provoquant la commutation d'un état à l'autre de la cellule à laquelle il est associé.

## Revendications

1. Ensemble d'affichage comprenant deux dispositifs d'affichage superposés respectivement supérieur (24) et inférieur (26), le dispositif d'affichage supérieur (24) comprenant une cellule d'affichage (28) agencée de façon à être transparente dans un premier état pour rendre visible le dispositif d'affichage inférieur (26), et de façon à afficher une information dans un deuxième état, des moyens de commande agencés pour fournir une tension de commande à la cellule (28) pour la faire passer du premier état au deuxième état et inversement, ladite cellule (28) étant une cellule d'affichage à cristaux liquides du type diffusant ou réflectif dans le deuxième état, **caractérisé en ce qu'**il comprend une cellule (28) du type nématique en hélice munie d'un polariseur linéaire (46) placé devant la cellule (28), d'une lame quart d'onde (48) et d'un film cholestérique (50) placés successivement derrière la cellule (28), **en ce que** le dispositif d'affichage supérieur (24) ou inférieur (26) comprend en outre une deuxième lame quart d'onde (52) et **en ce que** le dispositif d'affichage inférieur (26) comprend un réflecteur métallique placé derrière la deuxième lame quart d'onde.

2. Ensemble d'affichage comprenant deux dispositifs d'affichage superposés respectivement supérieur (24) et inférieur (26), le dispositif d'affichage supérieur (24) comprenant une cellule d'affichage (28) agencée de façon à être transparente dans un premier état pour rendre visible le dispositif d'affichage inférieur (26), et de façon à afficher une information dans un deuxième état, des moyens de commande agencés pour fournir une tension de commande à la cellule (28) pour la faire passer du premier état au deuxième état et inversement, ladite cellule (28) étant une cellule d'affichage à cristaux liquides du type diffusant ou réflectif dans le deuxième état, **caractérisé en ce qu'**il comprend une cellule (28) du type nématique en hélice munie d'un polariseur linéaire (46) placé devant la cellule (28), et d'une lame quart d'onde (48) associée à un film cholestérique (50) ayant un premier sens d'hélice placés successivement derrière la cellule (28), et **en ce que** le dispositif d'affichage inférieur (26) comprend un miroir cholestérique ayant un sens d'hélice inverse de celui dudit film cholestérique (50).

3. Ensemble d'affichage comprenant deux dispositifs d'affichage superposés respectivement supérieur (24) et inférieur (26), le dispositif d'affichage supérieur (24) comprenant une cellule d'affichage (28) agencée de façon à être transparente dans un premier état pour rendre visible le dispositif d'affichage inférieur (26), et de façon à afficher une information dans un deuxième état, des moyens de commande agencés pour fournir une tension de commande à la cellule (28) pour la faire passer du premier état au deuxième état et inversement, ladite cellule (28) étant une cellule d'affichage à cristaux liquides du type diffusant ou réflectif dans le deuxième état, **caractérisé en ce qu'**il comprend une cellule (28) du type nématique en hélice munie d'un polariseur linéaire (46) placé devant la cellule (28), et d'une lame quart d'onde (48) associée à un film cholestérique (50) placés successivement derrière la cellule (28), et **en ce que** le dispositif d'affichage inférieur (26) comprend en outre une lame demi onde et un deuxième film cholestérique (58) identique au premier.

4. Ensemble d'affichage selon l'une quelconque des revendications 1 à 3, **caractérisé en ce que** la cellule (28) est transparente dans le premier état en l'absence de tension appliquée par les moyens de commande.

5. Ensemble d'affichage selon l'une quelconque des revendications précédentes, **caractérisé en ce que** le dispositif d'affichage inférieur (26) est un dispositif d'affichage choisi dans l'ensemble formé par les dispositifs analogiques, numériques, une combinaison de ces derniers et/ou un élément décoratif.

6. Pièce d'horlogerie comprenant une boîte (2) fermée par une glace (22) et un fond (4), dans laquelle est logé un mouvement d'horlogerie (6) associé à un dispositif d'affichage de grandeurs temporelles, **caractérisée en ce qu'**elle comprend un ensemble d'affichage selon l'une quelconque des revendications 1 à 5, le dispositif d'affichage inférieur (26) étant formé par le dispositif d'affichage de grandeurs temporelles, et le dispositif d'affichage supérieur (24) s'étendant entre la glace (22) et le dispositif d'affichage de grandeurs temporelles.

7. Pièce d'horlogerie selon la revendication 6, **caractérisée en ce que** le dispositif d'affichage de grandeurs temporelles comprend un cadran (18), une aiguille des heures (16) et une aiguille des minutes (24) qui se déplacent au dessus dudit cadran (18).

8. Pièce d'horlogerie selon l'une quelconque des revendications 6 ou 7, **caractérisée en ce que** la glace (22) est formée par le dispositif d'affichage supérieur (24).

## Claims

1. Display assembly including two superposed, respectively upper (24) and lower (26) display devices, the upper display device (24) including a display cell (28) arranged so as to be transparent in a first state to make the lower display device (26) visible, and so as to display an item of data in a second state, control means being provided for supplying a control voltage to the cell (28) to cause it to switch from the first state to the second state and vice versa, said cell (28) being a liquid crystal display cell of the diffusing or reflective type in the second state, **characterised in that** it comprises a cell (28) of the twisted nematic type provided with a linear polariser (46) placed in front of the cell, a quarter-wave plate (48) and a cholesteric film (50) placed in succession behind the cell (28), **in that** the upper (24) or lower (26) display device further includes a second quarter-wave plate (52) and **in that** the lower display device (26) includes a metal reflector placed behind the second quarter-wave plate.

2. Display assembly including two superposed, respectively upper (24) and lower (26) display devices, the upper display device (24) including a display cell (28) arranged so as to be transparent in a first state to make the lower display device (26) visible, and so as to display an item of data in a second state, control means being provided for supplying a control voltage to the cell (28) to cause it to switch from the first state to the second state and vice versa, said cell (28) being a liquid crystal display cell of the diffusing or reflective type in the second state, **characterised in that** it comprises a cell (28) of the twisted nematic type provided with a linear polariser (46) placed in front of the cell (28), and a quarter-wave plate (48) associated with a cholesteric film (50) having a first helical direction placed in succession behind the cell (28), and **in that** the lower display device (26) includes a cholesteric mirror having an opposite helical direction to that of said cholesteric film (50).

3. Display assembly including two superposed, respectively upper (24) and lower (26) display devices, the upper display device (24) including a display cell (28) arranged so as to be transparent in a first state to make the lower display device (26) visible, and so as to display an item of data in a second state, control means being provided for supplying a control voltage to the cell (28) to cause it to switch from the first state to the second state and vice versa, said cell (28) being a liquid crystal display cell of the diffusing or reflective type in the second state, **characterised in that** it comprises a cell (28) of the twisted nematic type provided with a linear polariser (46) placed in front of the cell (28), and a quarter-wave plate (48) associated with a cholesteric film (50) placed in succession behind the cell (28), and **in that** the lower display device further includes a half-wave plate and a second cholesteric film (58) which is identical to the first.

4. Display assembly according to any of claims 1 to 11, **characterised in that** the cell (28) is transparent in the absence of any voltage applied by the control means.

5. Display assembly according to any of the preceding claims, **characterised in that** the lower display device (26) is a display device chosen from among the group including analogue or digital devices, a combination of the latter and/or a decorative element.

6. Timepiece including a case (2) closed by a crystal (22) and a back cover (4), a clockwork movement (6) being housed in the case, said movement being associated with a display device of time related information, **characterised in that** it includes a display assembly according to any of claims 1 to 5, said lower display device (26) being formed by said display device of time related information and said upper display device (24) extending between the crystal (22) and said display device of time related information.

7. Timepiece according to claim 6, **characterised in that** said display device of time related information includes a dial (18) and an hour hand (16) and a minute hand (24) which move above said dial (18)

8. Timepiece according to either of claims 6 or 7, **characterised in that** the crystal (22) is formed by the upper display device (24).

## Patentansprüche

1. Anzeigeanordnung, die zwei einander überlagerte Anzeigevorrichtungen umfasst, nämlich eine obere Anzeigevorrichtung (24) und eine untere Anzeigevorrichtung (26), wobei die obere Anzeigevorrichtung (24) eine Anzeigezelle (28), die so beschaffen ist, dass sie in einem ersten Zustand lichtdurchlässig ist, um die untere Anzeigevorrichtung (26) erkennbar zu machen, und so beschaffen ist, dass sie in einem zweiten Zustand eine Information anzeigt, und Steuermittel, die dazu ausgelegt sind, an die Zelle (28) eine Steuerspannung zu liefern, um sie von dem ersten Zustand in den zweiten Zustand und umgekehrt übergehen zu lassen umfasst, wobei die Zelle (28) eine Flüssigkristallanzeigezelle des streuenden oder reflektierenden Typs im zweiten Zustand ist, **dadurch gekennzeichnet, dass** sie eine Zelle (28) des schraubenlinienförmigen nematischen Typs ist, die versehen ist mit einem Linearpolarisator (46), der vor der Zelle (28) angeordnet ist, einem Viertelwellenlängenplättchen (48) und einer dünnen cholesterischen Schicht (50), die nacheinander hinter der Zelle (28) angeordnet sind, dass die obere Anzeigevorrichtung (24) oder die untere Anzeigevorrichtung (26) außerdem ein zweites Viertelwellenlängenplättchen (52) umfasst und dass die untere Anzeigevorrichtung (26) einen metallischen Reflektor umfasst, der hinter dem zweiten Viertelwellenlängenplättchen angeordnet ist.

2. Anzeigeanordnung, die zwei einander überlagerte Anzeigevorrichtungen umfasst, nämlich eine obere Anzeigevorrichtung (24) und eine untere Anzeigevorrichtung (26), wobei die obere Anzeigevorrichtung (24) eine Anzeigezelle (28), die so beschaffen ist, dass sie in einem ersten Zustand lichtdurchlässig ist, um die untere Anzeigevorrichtung (26) erkennbar zu machen, und so beschaffen ist, dass sie in einem zweiten Zustand eine Information anzeigt, und Steuermittel, die dazu ausgelegt sind, an die Zelle (28) eine Steuerspannung zu liefern, um sie von dem ersten Zustand in den zweiten Zustand und umgekehrt übergehen zu lassen, umfasst, wobei die Zelle (28) eine Flüssigkristallanzeigezelle des streuenden oder reflektierenden Typs im zweiten Zustand ist, **dadurch gekennzeichnet, dass** sie eine Zelle (28) des schraubenlinienförmigen nematischen Typs umfasst, die versehen ist mit einem Linearpolarisator (46), der vor der Zelle (28) angeordnet ist, und mit einem Viertelwellenlängenplättchen (48), dem eine dünne cholestrische Schicht (50) mit einer ersten Schraubenlinienrichtung zugeordnet ist, die nacheinander hinter der Zelle (28) angeordnet sind, und dass die untere Anzeigevorrichtung (26) einen cholesterischen Spiegel mit einer Schraubenlinienrichtung, die zu jener der dünnen cholesterischen Schicht (50) entgegengesetzt ist, aufweist.

3. Anzeigeanordnung, die zwei einander überlagerte Anzeigevorrichtungen umfasst, nämlich eine obere Anzeigevorrichtung (24) und eine untere Anzeigevorrichtung (26), wobei die obere Anzeigevorrichtung (24) eine Anzeigezelle (28), die so beschaffen ist, dass sie in einem ersten Zustand lichtdurchlässig ist, um die untere Anzeigevorrichtung (26) erkennbar zu machen, und so beschaffen ist, dass sie in einem zweiten Zustand eine Information anzeigt, und Steuermittel, die dazu ausgelegt sind, an die Zelle (28) eine Steuerspannung zu liefern, um sie von dem ersten Zustand in den zweiten Zustand und umgekehrt übergehen zu lassen, umfasst, wobei die Zelle (28) eine Flüssigkristallanzeigezelle des streuenden oder reflektierenden Typs im zweiten Zustand ist, **dadurch gekennzeichnet, dass** sie eine Zelle (28) des schraubenlinienförmigen nematischen Typs umfasst, die versehen ist mit einem Linearpolarisator (46), der vor der Zelle (28) angeordnet ist, und einem Viertelwellenlängenplättchen (48), dem eine dünne cholesterische Schicht (50) zugeordnet ist, die nacheinander hinter der Zelle (28) angeordnet sind, und dass die untere Anzeigevorrichtung (26) außerdem ein Halbwellenlängenplättchen und eine zweite dünne cholesterische Schicht (58), die wie die erste beschaffen ist, umfasst.

4. Anzeigeanordnung nach einem der Ansprüche 1 bis 3, **dadurch gekennzeichnet, dass** die Zelle (28) im ersten Zustand bei Abwesenheit einer durch die Steuermittel angelegten Spannung lichtdurchlässig ist.

5. Anzeigeanordnung nach einem der vorhergehenden Ansprüche, **dadurch gekennzeichnet, dass** die untere Anzeigevorrichtung (26) eine Anzeigevorrichtung ist, die aus der Gruppe gewählt ist, die durch analoge Vorrichtungen, digitale Vorrichtungen und eine Kombination aus diesen Letzteren und/oder aus einem verzierenden Element gebildet ist.

6. Zeitmessgerät, das ein durch ein Uhrenglas (22) und einen Boden (4) verschlossenes Gehäuse (2) umfasst, in dem ein Uhrwerk (6) angeordnet ist, dem eine Vorrichtung für die Anzeige zeitlicher Größen zugeordnet ist, **dadurch gekennzeichnet, dass** es eine Anzeigeanordnung nach einem der Ansprüche 1 bis 5 umfasst, wobei die untere Anzeigevorrichtung (26) durch die Vorrichtung zum Anzeigen zeitlicher Größen gebildet ist und die obere Anzeigevorrichtung (24) sich zwischen dem Uhrenglas (22) und der Vorrichtung zum Anzeigen zeitlicher Größen erstreckt.

7. Zeitmessgerät nach Anspruch 6, **dadurch gekennzeichnet, dass** die Vorrichtung zum Anzeigen zeitlicher Größen ein Zifferblatt (18), einen Stundenzeiger (16) und einen Minutenzeiger (24), die sich auf dem Zifferblatt (18) verlagern, umfasst.

8. Zeitmessgerät nach einem der Ansprüche 6 oder 7, **dadurch gekennzeichnet, dass** das Uhrenglas (22) durch die obere Anzeigevorrichtung (24) gebildet ist.
